# EUROPÄISCHE PATENTSCHRIFT

(11) **EP 2 942 229 B1**
(45) Veröffentlichungstag und Bekanntmachung des Hinweises auf die Patenterteilung: **21.09.2016**
(21) Anmeldenummer: 14167214.7
(22) Anmeldetag: 06.05.2014
(51) Int. Cl.: B60L 15/00, H01F 27/38, B60L 9/00, B60L 9/04, B60L 9/08, B60L 9/14, B60L 9/30, B60S 5/06, B60L 11/18

(54) **Elektrische Maschine und deren Verwendung als Antriebstransformator oder Drosselspule**
Electrical machine and its use as traction transformer or choke
Machine électrique et son utilisation comme transformateur d'entraînement ou bobine de réactance

(43) Veröffentlichungstag der Anmeldung: 11.11.2015
(73) Patentinhaber: Siemens Aktiengesellschaft, 80333 München (DE)
(72) Erfinder: Baumann, Markus, 90762 Fürth (DE); Beck, Reinhold, 91578 Leutershausen (DE); Hörmann, Daniel, 90489 Nürnberg (DE); Prinz, Catherine, 91056 Erlangen (DE); Silbernagel, Andre, 90491 Nürnberg (DE); Zehner, Ingo Gerd, 90513 Zirndorf (DE)

(56) Entgegenhaltungen:
- EP-A1- 1 315 180
- WO-A1-2009/132675
- CN-A- 103 754 123
- FR-A1- 2 881 266

## Beschreibung

Die Erfindung betrifft eine elektrische Maschine zum wahlweisen Betrieb als Transformator für den Wechselspannungsbetrieb oder als Drosselsystem für den Gleichstrombetrieb. Ferner betrifft die Erfindung eine Verwendung einer derartigen elektrischen Maschine.

Das europäische Bahnstromnetz besteht gegenwärtig aus vier verschiedenen Spannungssystemen, nämlich einem System mit einer Wechselspannung mit 15 kV und 16,67 Hz, einem System mit einer Wechselspannung mit 25 kV und 50 Hz, einem System mit einer Gleichspannung mit 3 kV und einem System mit einer Gleichspannung mit 1,5 kV. Damit ein Zug in allen diesen vier Spannungssystemen länderübergreifend fahren kann, werden Fahrzeugantriebe verwendet, die einen Transformatoraktivteil für den Wechselspannungsbetrieb mit 15 kV und 25 kV und zusätzliche Drosseln für den Gleichspannungsbetrieb mit 3 kV und 1,5 kV mit einer bestimmten Induktivität aufweisen. Diese Induktivität im Gleichspannungsbetrieb wird benötigt, um die Eingangsimpedanzforderungen, elektromagnetischen Verträglichkeits- und Störstromgrenzwerte des Zugbetreibers und die gesetzlichen sowie normativen Vorschriften einzuhalten. In der Vergangenheit war im Gleichspannungsbetrieb der Transformatoraktivteil nicht angeschlossen und nur die separaten Drosseln wurden verwendet. Im Wechselspannungsbetrieb war der Transformatoraktivteil angeschlossen und die Drosseln wurden nicht verwendet.

Der Erfindung liegt die Aufgabe zugrunde, eine verbesserte elektrische Maschine zum wahlweisen Betrieb als ein Transformator für einen Wechselspannungsbetrieb oder als ein Drosselsystem für einen Gleichspannungsbetrieb anzugeben. Ferner liegt der Erfindung die Aufgabe zugrunde, eine Verwendung einer derartigen elektrischen Maschine in einem Fahrzeug anzugeben, dessen Fahrzeugantrieb wahlweise mittels einer externen Wechselspannung oder Gleichspannung mit elektrischer Energie versorgt wird.

Die Aufgabe wird erfindungsgemäß hinsichtlich der elektrischen Maschine durch die Merkmale des Anspruchs 1 und hinsichtlich deren Verwendung durch die Merkmale des Anspruchs 8 gelöst.

Vorteilhafte Ausgestaltungen der Erfindung sind Gegenstand der Unteransprüche.

Eine erfindungsgemäße elektrische Maschine zum wahlweisen Betrieb als Transformator für einen Wechselspannungsbetrieb oder als Drosselsystem für einen Gleichspannungsbetrieb umfasst einen Transformatorkern mit zwei Schenkeln, eine Oberspannungswicklung, zwei Traktionswicklungen und eine Zusatzwicklung. Die Zusatzwicklung umfasst eine um einen ersten Schenkel des Transformatorkerns gewickelte erste Zusatzteilwicklung und eine um den zweiten Schenkel des Transformatorkerns gewickelte und mit der ersten Zusatzteilwicklung elektrisch verbundene zweite Zusatzteilwicklung. Die Oberspannungswicklung umfasst eine um die erste Zusatzteilwicklung gewickelte erste Oberspannungsteilwicklung und eine um die zweite Zusatzteilwicklung gewickelte und mit der ersten Oberspannungsteilwicklung elektrisch verbundene zweite Oberspannungsteilwicklung. Die erste Traktionswicklung ist um die erste Oberspannungsteilwicklung gewickelt. Die zweite Traktionswicklung ist um die zweite Oberspannungsteilwicklung gewickelt.

Zum Betrieb als Transformator im Wechselspannungsbetrieb werden nur die Oberspannungswicklung und die Traktionswicklungen benötigt. Die Zusatzwicklung wird nur im Gleichspannungsbetrieb benötigt. Im Gleichspannungsbetrieb können die Traktionswicklungen als Netzfilterdrosseln für einen Gleichspannungsantriebsstrang des Fahrzeugantriebs verwendet werden. Auf diese Weise können vorteilhaft zusätzliche Drosseln für den Gleichspannungsbetrieb entfallen. Bei einer Verwendung einer erfindungsgemäßen elektrischen Maschine in einem Fahrzeug ermöglicht dies eine Gewichtsreduzierung gegenüber elektrischen Maschinen mit zusätzlichen Drosseln für den Gleichspannungsbetrieb und die elektrische Maschine kann kleiner, leichter und kostengünstiger konstruiert werden.

Eine Ausgestaltung der Erfindung sieht eine um die erste Traktionswicklung gewickelte erste Gleichspannungswicklung und eine um die zweite Traktionswicklung gewickelte zweite Gleichspannungswicklung vor.

Die Gleichspannungswicklungen können im Gleichspannungsbetrieb vorteilhaft elektrisch in Reihe mit jeweils einer Traktionswicklung geschaltet werden, um erforderlichenfalls die Induktivitäten gegenüber den Traktionswicklungen allein zu erhöhen. Auf diese Weise können die Induktivitäten im Gleichspannungsbetrieb vorteilhaft Eingangsimpedanzforderungen, elektromagnetischen Verträglichkeits- und Störstromgrenzwerten, gesetzlichen Vorgaben und/oder normativen Vorschriften angepasst werden.

Eine weitere Ausgestaltung der Erfindung sieht vor, dass der Transformatorkern aus einem ferromagnetischen oder ferrimagnetischen Material gefertigt ist.

Ferromagnetische oder ferrimagnetische Materialien eignen sich aufgrund ihrer magnetischen Eigenschaften besonders vorteilhaft zur Fertigung des Transformatorkerns.

Eine weitere Ausgestaltung der Erfindung sieht vor, dass die Zusatzteilwicklungen elektrisch in Reihe geschaltet sind.

Dadurch werden vorteilhaft nur zwei Durchführungen zur Kontaktierung der Zusatzteilwicklungen benötigt.

Eine weitere Ausgestaltung der Erfindung sieht vor, dass die Oberspannungsteilwicklungen elektrisch parallel geschaltet sind.

Dadurch werden die Traktionswicklungen im Wechselspannungsbetrieb vorteilhaft magnetisch entkoppelt.

Weitere Ausgestaltungen der Erfindung sehen wenigstens zwei entlang des ersten Schenkels hintereinander angeordnete und jeweils um den ersten Schenkel gewickelte erste Zusatzteilwicklungen, für jede erste Zusatzteilwicklung eine um diese erste Zusatzteilwicklung gewickelte erste Oberspannungsteilwicklung, und für jede erste Oberspannungsteilwicklung eine um diese erste Oberspannungsteilwicklung gewickelte erste Traktionswicklung und/oder wenigstens zwei entlang des zweiten Schenkels hintereinander angeordnete und jeweils um den zweiten Schenkel gewickelte zweite Zusatzteilwicklungen, für jede zweite Zusatzteilwicklung eine um diese zweite Zusatzteilwicklung gewickelte zweite Oberspannungsteilwicklung, und für jede zweite Oberspannungsteilwicklung eine um diese zweite Oberspannungsteilwicklung gewickelte zweite Traktionswicklung vor.

Dadurch kann vorteilhaft die Anzahl der Traktionswicklungen den jeweiligen Anforderungen angepasst werden.

Die Erfindung sieht ferner die Verwendung einer erfindungsgemäßen elektrischen Maschine in einem Fahrzeug mit einem wahlweise mittels einer externen Wechselspannung oder Gleichspannung mit elektrischer Energie versorgten Fahrzeugantrieb vor. Im Wechselspannungsbetrieb wird die externe Wechselspannung an die Oberspannungswicklung angelegt, die Zusatzwicklung wird einseitig geerdet wird und bleibt ansonsten elektrisch unverbunden, und die Traktionswicklungen werden jeweils mit einem Stromrichter für den Fahrzeugantrieb verbunden. Im Gleichspannungsbetrieb wird die Oberspannungswicklung einseitig geerdet und bleibt ansonsten elektrisch unverbunden, die Zusatzwicklung wird kurzgeschlossen und einseitig geerdet, und die Traktionswicklungen werden jeweils als eine Netzfilterdrossel für einen Gleichspannungsantriebsstrang des Fahrzeugantriebs geschaltet.

Diese Verwendung einer erfindungsgemäßen elektrischen Maschine eignet sich aufgrund des oben bereits thematisierten Wegfalls zusätzlicher Drosseln für den Gleichspannungsbetrieb besonders vorteilhaft für wahlweise mittels einer externen Wechselspannung oder Gleichspannung angetriebene Fahrzeuge, die möglichst leicht und/oder bauraumsparend gestaltet werden sollen. Insbesondere eignet sich diese Verwendung für Fahrzeuge, die als Triebwagen oder Elektrolokomotiven von Zügen ausgebildet sind.

Im Fall, dass die elektrische Maschine eine um die erste Traktionswicklung gewickelte erste Gleichspannungswicklung und eine um die zweite Traktionswicklung gewickelte zweite Gleichspannungswicklung aufweist, werden die Gleichspannungswicklungen im Wechselspannungsbetrieb vorzugsweise einseitig geerdet und bleiben ansonsten elektrisch unverbunden, und im Gleichspannungsbetrieb wird wenigstens eine Gleichspannungswicklung elektrisch in Reihe zu einer Traktionswicklung geschaltet.

Wie oben bereits ausgeführt wurde, kann durch die Reihenschaltung wenigstens einer Gleichspannungswicklung und einer Traktionswicklung im Gleichspannungsbetrieb erforderlichenfalls die Induktivität gegenüber der Traktionswicklung allein erhöht und Eingangsimpedanzforderungen, elektromagnetischen Verträglichkeits- und Störstromgrenzwerten, gesetzlichen Vorgaben und/oder normativen Vorschriften angepasst werden.

Eine Ausgestaltung der Verwendung sieht vor, dass der Fahrzeugantrieb jeweils über ein Fahrleitungssystem im Wechselspannungsbetrieb mittels einer externen Wechselspannung und im Gleichspannungsbetrieb mit einer externen Gleichspannung mit elektrischer Energie versorgt wird.

Diese Ausgestaltung richtet sich insbesondere auf die Verwendung der Erfindung für Züge, die wahlweise mittels einer externen Wechselspannung oder Gleichspannung angetrieben werden sollen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: eine schematische Schnittdarstellung einer elektrischen Maschine,
- FIG 2: eine schematische Darstellung einer Verschaltung der Wicklungen einer elektrischen Maschine in einem Wechselspannungsbetrieb, und
- FIG 3: eine schematische Darstellung einer Verschaltung der Wicklungen einer elektrischen Maschine in einem Gleichspannungsbetrieb.

Einander entsprechende Teile sind in allen Figuren mit den gleichen Bezugszeichen versehen.

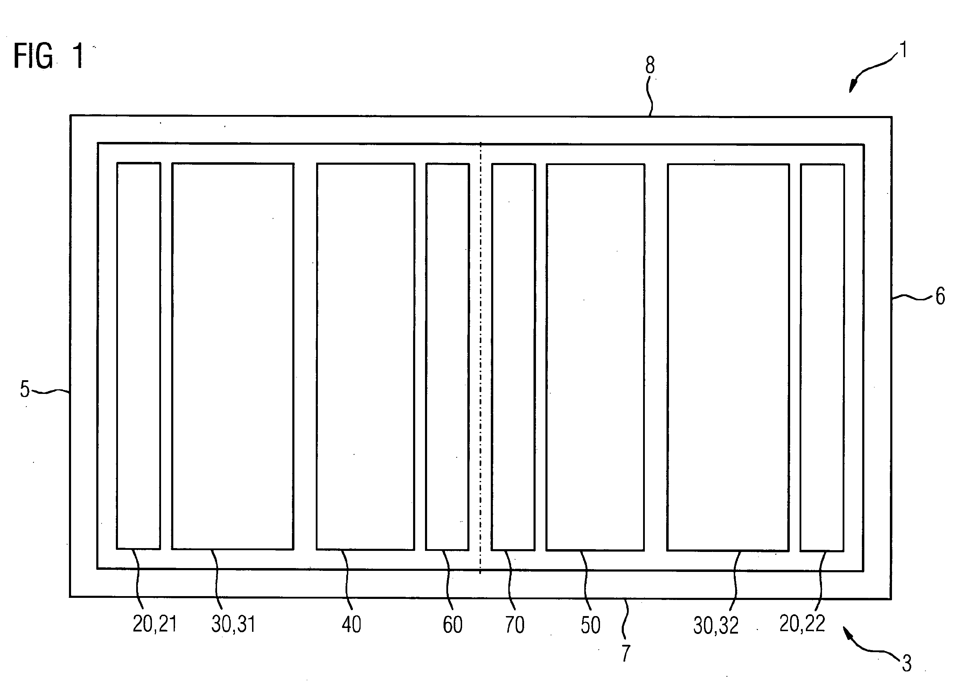

Figur 1 zeigt eine schematische Schnittdarstellung einer elektrischen Maschine 1. Die elektrischen Maschine 1 umfasst einen Transformatorkern 3 mit zwei zueinander parallelen Schenkeln 5, 6, die miteinander durch zwei zueinander parallele Joche 7, 8 verbunden sind. Um jeden Schenkel 5, 6 sind mehrere, unten näher beschriebene Wicklungen 20, 30, 40, 50, 60, 70 gewickelt. Figur 1 zeigt nur Bereiche zwischen den Schenkels 5, 6, in denen die Wicklungen 20, 30, 40, 50, 60, 70 jeweils verlaufen, nicht aber einzelne Leiter oder Windungen der Wicklungen 20, 30, 40, 50, 60, 70. Ferner sind die dazu korrespondierenden Bereiche der Wicklungen 20, 30, 40, 50, 60, 70 nicht dargestellt, die sich in der Zeichenebene an die beiden Außenseiten der Schenkel 5, 6 anschließen, d. h. sich links und rechts von dem Transformatorkern 3 befinden.

Die Schenkel 5, 6 und Joche 7, 8 des Transformatorkerns 3 sind vorzugsweise aus einem ferromagnetischen oder ferrimagnetischen Material gefertigt.

Die Wicklungen 20, 30, 40, 50, 60, 70 umfassen eine Zusatzwicklung 20, eine Oberspannungswicklung 30, zwei Traktionswicklungen 40, 50 und zwei Gleichspannungswicklungen 60, 70.

Die Zusatzwicklung 20 umfasst eine um einen ersten Schenkel 5 des Transformatorkerns 3 gewickelte erste Zusatzteilwicklung 21 und eine um den zweiten Schenkel 6 des Transformatorkerns 3 gewickelte und mit der ersten Zusatzteilwicklung 5 elektrisch vorzugsweise in Reihe geschaltete zweite Zusatzteilwicklung 22.

Die Oberspannungswicklung 30 umfasst eine um die erste Zusatzteilwicklung 21 gewickelte erste Oberspannungsteilwicklung 31 und eine um die zweite Oberspannungsteilwicklung 32 gewickelte und mit der ersten Oberspannungsteilwicklung 31 elektrisch parallel geschaltete zweite Oberspannungsteilwicklung 32.

Eine erste Traktionswicklung 40 ist um die erste Oberspannungsteilwicklung 31 gewickelt. Die zweite Traktionswicklung 50 ist um die zweite Oberspannungsteilwicklung 32 gewickelt.

Eine erste Gleichspannungswicklung 60 ist um die erste Traktionswicklung 40 gewickelt. Die zweite Gleichspannungswicklung 70 ist um die zweite Traktionswicklung 50 gewickelt.

Dabei sind die erste Zusatzteilwicklung 21, die erste Oberspannungsteilwicklung 31, die erste Traktionswicklung 40 und die erste Gleichspannungswicklung 60 konzentrisch um den ersten Schenkel 5 gewickelt.

Die zweite Zusatzteilwicklung 22, die zweite Oberspannungsteilwicklung 32, die zweite Traktionswicklung 50 und die zweite Gleichspannungswicklung 70 sind konzentrisch um den zweiten Schenkel 6 gewickelt.

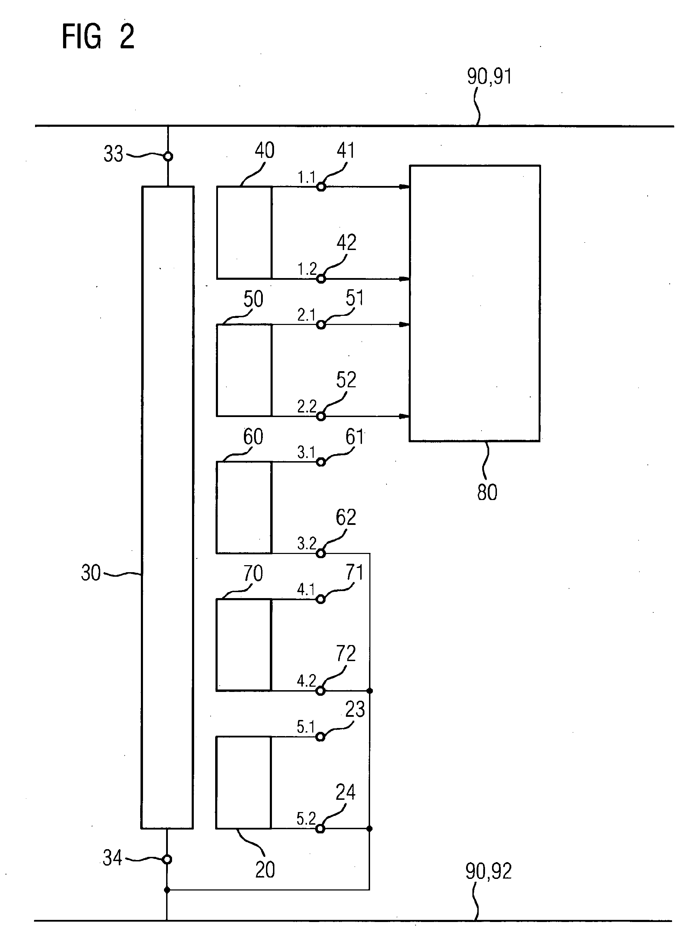

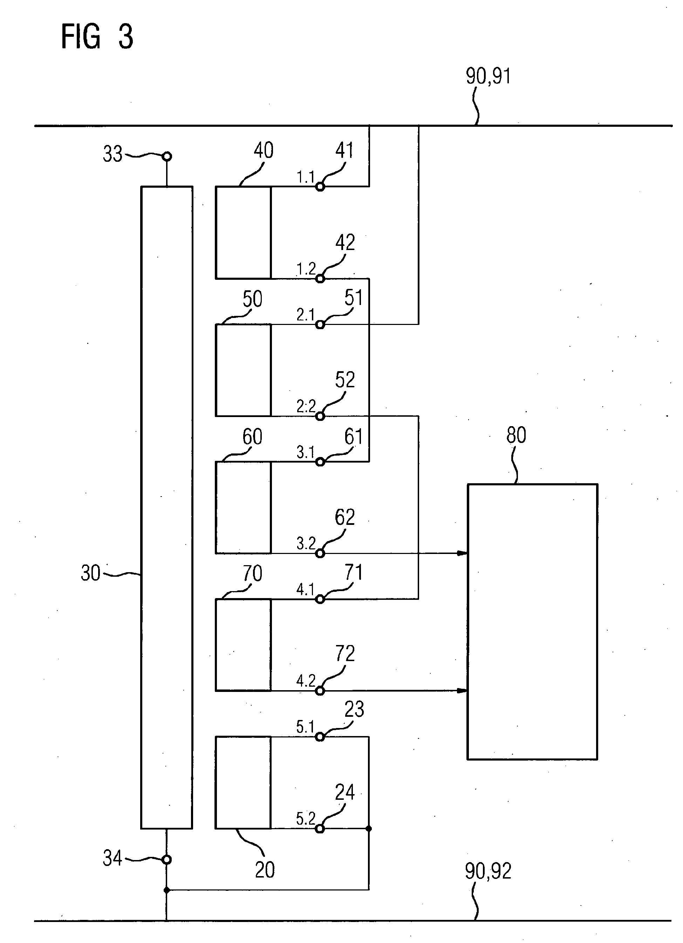

Die Figuren 2 und 3 zeigen jeweils eine schematische Darstellung einer Verschaltung der Wicklungen 20, 30, 40, 50, 60, 70 der in Figur 1 dargestellten elektrischen Maschine 1 in einem in Figur 2 dargestellten Wechselspannungsbetrieb und in einem in Figur 3 dargestellten Gleichspannungsbetrieb. Dabei wird die elektrische Maschine 1 in einem Fahrzeug verwendet, das einen Fahrzeugantrieb 80 aufweist, der wahlweise mittels einer externen Wechselspannung oder einer externen Gleichspannung über jeweils ein Fahrleitungssystem 90 mit elektrischer Energie versorgt wird. Das Fahrleitungssystem 90 umfasst beispielsweise jeweils eine Fahrleitung 91, die beispielsweise als eine Oberleitung ausgebildet ist, und eine geerdete Rückleitung 92, die beispielsweise als eine Fahrbahnschiene realisiert ist. Zwischen der Fahrleitung 91 und der Rückleitung 92 liegt jeweils die Wechselspannung oder Gleichspannung an.

Figur 2 zeigt die Verschaltung der Wicklungen 20, 30, 40, 50, 60, 70 im Wechselspannungsbetrieb der elektrischen Maschine 1.

Dabei ist ein erstes Ende der Oberspannungswicklung 30 über eine erste Oberspannungswicklungsanschlussklemme 33 elektrisch mit der Fahrleitung 91 verbunden und ein zweites Ende der Oberspannungswicklung 30 ist über eine zweite Oberspannungswicklungsanschlussklemme 34 mit der Rückleitung 92 verbunden.

Die erste Traktionswicklung 40 ist an einem ersten Ende über eine erste Traktionswicklungsanschlussklemme 41 und an einem zweiten Ende über eine zweite Traktionswicklungsanschlussklemme 42 mit einem (nicht näher dargestellten) Stromrichter für den Fahrzeugantrieb 80 verbunden. Die zweite Traktionswicklung 50 ist an einem ersten Ende über eine dritte Traktionswicklungsanschlussklemme 51 und an einem zweiten Ende über eine vierte Traktionswicklungsanschlussklemme 52 mit einem (nicht näher dargestellten) Stromrichter für den Fahrzeugantrieb 80 verbunden.

Die erste Gleichspannungswicklung 60 wird lediglich über eine zweite Gleichspannungswicklungsanschlussklemme 62 mit der

Rückleitung 92 elektrisch verbunden und dadurch einseitig geerdet, und bleibt ansonsten elektrisch unverbunden. Die zweite Gleichspannungswicklung 70 wird lediglich über eine zweite Gleichspannungswicklungsanschlussklemme 72 mit der Rückleitung 92 elektrisch verbunden und dadurch einseitig geerdet, und bleibt ansonsten elektrisch unverbunden. Die Zusatzwicklung 20 wird nur über eine zweite Zusatzwicklungsanschlussklemme 24 mit der Rückleitung 92 elektrisch verbunden und dadurch einseitig geerdet, und bleibt ansonsten elektrisch unverbunden.

Figur 3 zeigt die Verschaltung der Wicklungen 20, 30, 40, 50, 60, 70 im Gleichspannungsbetrieb der elektrischen Maschine 1.

Die Oberspannungswicklung 30 wird lediglich über die zweite Oberspannungswicklungsanschlussklemme 34 mit der Rückleitung 92 elektrisch verbunden und dadurch einseitig geerdet, und bleibt ansonsten elektrisch unverbunden.

Die Zusatzwicklung 20 wird durch eine elektrische Verbindung der beiden Zusatzwicklungsanschlussklemmen 23, 24 kurzgeschlossen und über die zweite Zusatzwicklungsanschlussklemme 24 mit der Rückleitung 92 verbunden und dadurch geerdet.

Die erste Traktionswicklung 40 wird über die erste Traktionswicklungsanschlussklemme 41 elektrisch mit der Fahrleitung 91 und über die zweite Traktionswicklungsanschlussklemme 42 und die erste Gleichspannungswicklungsanschlussklemme 61 mit der ersten Gleichspannungswicklung 60 verbunden. Die erste Gleichspannungswicklung 60 wird ferner elektrisch über die zweite Gleichspannungswicklungsanschlussklemme 62 mit einem (nicht näher dargestellten) Gleichspannungsantriebsstrang des Fahrzeugantriebes 80 verbunden. Dadurch wirken die erste Traktionswicklung 40, die erste Gleichspannungswicklung 60 und deren Anschlussklemmen 41, 42, 61, 62 als eine Netzfilterdrossel für den Gleichspannungsantriebsstrang des Fahrzeugantriebes 80.

Die zweite Traktionswicklung 50 wird über die dritte Traktionswicklungsanschlussklemme 51 elektrisch mit der Fahrleitung 91 und über die vierte Traktionswicklungsanschlussklemme 52 und die dritte Gleichspannungswicklungsanschlussklemme 71 mit der zweiten Gleichspannungswicklung 70 verbunden. Die zweite Gleichspannungswicklung 70 wird ferner elektrisch über die vierte Gleichspannungswicklungsanschlussklemme 72 mit einem (nicht näher dargestellten) Gleichspannungsantriebsstrang des Fahrzeugantriebes 80 verbunden. Dadurch wirken die zweite Traktionswicklung 50, die zweite Gleichspannungswicklung 70 und deren Anschlussklemmen 51, 52, 71, 72 ebenfalls als eine Netzfilterdrossel für den Gleichspannungsantriebsstrang des Fahrzeugantriebes 80.

Alternativ zu dem in den Figuren 1 bis 3 dargestellten Ausführungsbeispiel können in anderen Ausführungsbeispielen beispielsweise die Gleichspannungswicklungen 60, 70 fehlen, wenn durch die Traktionswicklungen 40, 50 allein bereits Netzfilterdrosseln mit ausreichenden Induktivitäten für den Gleichspannungsbetrieb realisiert werden können, und/oder es können auf jeden Schenkel 5, 6 als nur eine Traktionswicklung 40, 50 um die jeweilige Oberspannungsteilwicklung 31, 32 gewickelt sein.

Das Fahrzeug ist beispielsweise ein Triebwagen oder eine Elektrolokomotive eines Zuges. Für den Betrieb eines derartigen Fahrzeuges in den eingangs erwähnten verschiedenen Spannungssystemen des europäischen Bahnstromnetzes ist die elektrische Maschine 1 dazu ausgelegt, im Wechselspannungsbetrieb Wechselspannungen mit 15 kV und/oder 25 kV in von dem Fahrzeugantrieb 80 benötigte Wechselspannungen umzuwandeln, und im Gleichspannungsbetrieb mittels der Traktionswicklungen 40, 50 und (optional) der Gleichspannungswicklungen 60, 70 Netzfilterdrosseln mit den erforderlichen Induktivitäten für Gleichspannungen mit 3 kV und/oder 1,5 kV zu realisieren.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Elektrische Maschine (1) zum wahlweisen Betrieb als Transformator für einen Wechselspannungsbetrieb oder als Drosselsystem für einen Gleichspannungsbetrieb, die elektrische Maschine (1) umfassend
- einen Transformatorkern (3) mit zwei Schenkeln (5, 6),
- eine Zusatzwicklung (20) mit einer um einen ersten Schenkel (5) des Transformatorkerns (3) gewickelten ersten Zusatzteilwicklung (21) und einer um den zweiten Schenkel (6) des Transformatorkerns (3) gewickelten und mit der ersten Zusatzteilwicklung (21) elektrisch verbundenen zweiten Zusatzteilwicklung (22),
- eine Oberspannungswicklung (30) mit einer um die erste Zusatzteilwicklung (21) gewickelten ersten Oberspannungsteilwicklung (31) und einer um die zweite Zusatzteilwicklung (22) gewickelten und mit der ersten Oberspannungsteilwicklung (31) elektrisch verbundenen zweiten Oberspannungsteilwicklung (32),
- eine um die erste Oberspannungsteilwicklung (31) gewickelte erste Traktionswicklung (40),
- und eine um die zweite Oberspannungsteilwicklung (32) gewickelte zweite Traktionswicklung (50).

2. Elektrische Maschine (1) nach Anspruch 1,
**gekennzeichnet durch** eine um die erste Traktionswicklung (40) gewickelte erste Gleichspannungswicklung (60) und eine um die zweite Traktionswicklung (50) gewickelte zweite Gleichspannungswicklung (70).

3. Elektrische Maschine (1) nach einem der vorhergehenden Ansprüche,
**dadurch gekennzeichnet, dass** der Transformatorkern (3) aus einem ferromagnetischen oder ferrimagnetischen Material gefertigt ist.

4. Elektrische Maschine (1) nach einem der vorhergehenden Ansprüche,
**dadurch gekennzeichnet, dass** die Zusatzteilwicklungen (21, 22) elektrisch in Reihe geschaltet sind.

5. Elektrische Maschine (1) nach einem der vorhergehenden Ansprüche,
**dadurch gekennzeichnet, dass** die Oberspannungsteilwicklungen (31, 32) elektrisch parallel geschaltet sind.

6. Elektrische Maschine (1) nach einem der vorhergehenden Ansprüche,
**gekennzeichnet durch** wenigstens zwei entlang des ersten Schenkels (5) hintereinander angeordnete und jeweils um den ersten Schenkel (5) gewickelte erste Zusatzteilwicklungen (21), für jede erste Zusatzteilwicklung (21) eine um diese erste Zusatzteilwicklung (21) gewickelte erste Oberspannungsteilwicklung (31), und für jede erste Oberspannungsteilwicklung (31) eine um diese erste Oberspannungsteilwicklung (31) gewickelte erste Traktionswicklung (40).

7. Elektrische Maschine (1) nach einem der vorhergehenden Ansprüche,
**gekennzeichnet durch** wenigstens zwei entlang des zweiten Schenkels (6) hintereinander angeordnete und jeweils um den zweiten Schenkel (6) gewickelte zweite Zusatzteilwicklungen (22), für jede zweite Zusatzteilwicklung (22) eine um diese zweite Zusatzteilwicklung (22) gewickelte zweite Oberspannungsteilwicklung (32), und für jede zweite Oberspannungsteilwicklung (32) eine um diese zweite Oberspannungsteilwicklung (32) gewickelte zweite Traktionswicklung (50).

8. Verwendung einer elektrischen Maschine (1) nach einem der vorhergehenden Ansprüche in einem Fahrzeug mit einem wahlweise mittels einer externen Wechselspannung oder Gleichspannung mit elektrischer Energie versorgten Fahrzeugantrieb (80), wobei
- im Wechselspannungsbetrieb die externe Wechselspannung an die Oberspannungswicklung (30) angelegt wird, die Zusatzwicklung (20) einseitig geerdet wird und ansonsten elektrisch unverbunden bleibt, und die Traktionswicklungen (40, 50) jeweils mit einem Stromrichter für den Fahrzeugantrieb (80) verbunden werden,
- und im Gleichspannungsbetrieb die Oberspannungswicklung (30) einseitig geerdet wird und ansonsten elektrisch unverbunden bleibt, die Zusatzwicklung (20) kurzgeschlossen und einseitig geerdet wird, und die Traktionswicklungen (40, 50) jeweils als eine Netzfilterdrossel für einen Gleichspannungsantriebsstrang des Fahrzeugantriebs (80) geschaltet werden.

9. Verwendung nach Anspruch 8 im Fall, dass die elektrische Maschine (1) eine um die erste Traktionswicklung (40) gewickelte erste Gleichspannungswicklung (60) und eine um die zweite Traktionswicklung (50) gewickelte zweite Gleichspannungswicklung (70) aufweist,
**dadurch gekennzeichnet, dass** die Gleichspannungswicklungen (60, 70) im Wechselspannungsbetrieb einseitig geerdet werden und ansonsten elektrisch unverbunden bleiben, und dass wenigstens eine Gleichspannungswicklung (60, 70) im Gleichspannungsbetrieb elektrisch in Reihe zu einer Traktionswicklung (40, 50) geschaltet wird.

10. Verwendung nach Anspruch 8 oder 9,
**dadurch gekennzeichnet, dass** der Fahrzeugantrieb (80) jeweils über ein Fahrleitungssystem (90) im Wechselspannungsbetrieb mittels einer externen Wechselspannung und im Gleichspannungsbetrieb mit einer externen Gleichspannung mit elektrischer Energie versorgt wird.

## Claims

1. Electric machine (1) for optional operation as a transformer for AC voltage operation or as a choke system for DC voltage operation, the electric machine (1) comprising
- a transformer core (3) with two limbs (5, 6),
- an additional winding (20) with a first additional part winding (21) wound around a first limb (5) of the transformer core (3) and a second additional part winding (22) electrically connected to the first additional part winding (21) and wound around the second limb (6) of the transformer core (3),
- a higher-voltage winding (30) with a first higher-voltage part winding (31) wound around the first additional part winding (21) and a second higher-voltage part winding (32) electrically connected to the first higher-voltage part winding (31) and wound around the second additional part winding 32,
- a first traction winding (40) wound around the first higher-voltage part winding (31),
- and a second traction winding (50) wound around the second higher-voltage part winding (32).

2. Electric machine (1) according to claim 1,
**characterised by** a first DC voltage winding (60) wound around the first traction winding (40) and a second DC voltage winding (70) wound around the second traction winding (50).

3. Electric machine (1) according to one of the preceding claims, **characterised in that** the transformer core (3) is manufactured from a ferromagnetic or ferrimagnetic material.

4. Electric machine (1) according to one of the preceding claims, **characterised in that** the additional part windings (21, 22) are electrically connected in series.

5. Electric machine (1) according to one of the preceding claims, **characterised in that** the higher-voltage part windings (31, 32) are electrically connected in parallel.

6. Electric machine (1) according to one of the preceding claims, **characterised by** at least two first additional part windings (21) arranged one behind the other along the first limb (5) and wound around the first limb (5) in each instance, for each first additional part winding (21) a first higher-voltage part winding (31) wound around this first additional part winding (21) and for each first higher-voltage part winding (31) a first traction winding (40) wound around this first higher-voltage part winding (31).

7. Electric machine (1) according to one of the preceding claims, **characterised by** at least two second additional part windings (22) arranged one behind the other along the second limb (6) and wound around the second limb (6) in each instance, for each second additional part winding (22) a second higher-voltage part winding (32) wound around this second additional part winding (22) and for each second higher-voltage part winding (32) a second traction winding (50) wound around this second higher-voltage part winding (32).

8. Use of an electric machine (1) according to one of the preceding claims in a vehicle with a vehicle drive (80) optionally supplied with electrical energy by means of an external AC voltage or DC voltage, wherein
- during AC voltage operation, the external AC voltage is applied to the higher-voltage winding (30), the additional winding (20) is earthed on one side and otherwise remains electrically unconnected and the traction windings (40, 50) are connected in each instance to a current converter for the vehicle drive (80),
- and during DC voltage operation, the higher-voltage winding (30) is earthed on one side and otherwise remains electrically unconnected, the additional winding (20) is short-circuited and earthed on one side and the traction windings (40, 50) are connected in each instance as a mains filter choke for a DC voltage drive train of the vehicle drive (80).

9. Use according to claim 8, in the event that the electric machine (10) has a first DC voltage winding (60) wound around the first traction winding (40) and a second DC voltage winding (70) wound around the second traction winding (50),
**characterised in that** the DC voltage windings (60, 70) are earthed on one side during AC voltage operation and otherwise remain electrically unconnected and that at least one DC voltage winding (60, 70) is electrically connected in series with a traction winding (40, 50) during DC voltage operation.

10. Use according to claim 8 or 9,
**characterised in that** the vehicle drive (80) is supplied with electrical energy in each instance via a catenary line system (90) during AC voltage operation by means of an external AC voltage and during DC voltage operation with an external DC voltage.

## Revendications

1. Machine ( 1 ) électrique pour le fonctionnement, au choix, comme transformateur pour un fonctionnement en tension alternative ou comme système à bobine, pour un fonctionnement en tension continue, la machine ( 1 ) électrique comprenant :
- un noyau ( 3 ) de transformateur ayant deux branches ( 5, 6 ),
- un enroulement ( 20 ) supplémentaire ayant un premier sous-enroulement ( 21 ) supplémentaire enroulé autour d'une première branche ( 5 ) du noyau ( 3 ) du transformateur et un deuxième sous-enroulement ( 22 ) supplémentaire enroulé autour de la deuxième branche ( 6 ) du noyau ( 3 ) du transformateur et relié électriquement au premier sous-enroulement ( 21 ) supplémentaire,
- un enroulement ( 30 ) de haute tension ayant un premier sous-enroulement ( 31 ) de haute tension enroulé autour du premier sous-enroulement ( 21 ) supplémentaire, et un deuxième sous- enroulement ( 32 ) de haute tension, enroulé autour du deuxième sous- enroulement ( 22 ) supplémentaire et relié électriquement au premier sous-enroulement ( 31 ) de haute tension,
- un premier enroulement ( 40 ) de traction, enroulé autour du premier sous-enroulement ( 31 ) de haute tension,
- et un deuxième enroulement ( 50 ) de traction, enroulé autour du deuxième sous-enroulement ( 32 ) de haute tension.

2. Utilisation de la machine ( 1 ) électrique suivant la revendication 1,
**caractérisée par** un premier enroulement ( 60 ) de tension continue, enroulé autour du premier enroulement ( 40 ) de traction et un deuxième enroulement ( 70 ) de tension continue, enroulé autour du deuxième enroulement ( 50 ) de traction.

3. Utilisation de la machine ( 1 ) électrique suivant l'une des revendications précédentes, **caractérisée en ce que** le noyau ( 3 ) du transformateur est en un matériau ferromagnétique ou ferrimagnétique.

4. Utilisation de la machine ( 1 ) électrique suivant l'une des revendications précédentes, **caractérisée en ce que** les sous-enroulements ( 21, 22 ) supplémentaires sont montés électriquement en série.

5. Utilisation de la machine ( 1 ) électrique suivant l'une des revendications précédentes, **caractérisée en ce que** les sous-enroulements ( 31, 32 ) de haute tension sont montés électriquement en parallèle.

6. Utilisation de la machine ( 1 ) électrique suivant l'une des revendications précédentes, **caractérisée par** au moins deux premiers sous-enroulements ( 21 ) supplémentaires, disposés l'un derrière l'autre le long de la première branche ( 5 ) et enroulés, respectivement, autour de la première branche ( 5 ) pour chaque premier sous-enroulement ( 21 ) supplémentaire, un premier sous-enroulement ( 31 ) de haute tension enroulé autour de ce premier sous-enroulement ( 21 ) supplémentaire et, pour chaque premier sous-enroulement ( 31 ) de haute tension, un premier enroulement ( 40 ) de traction, enroulé autour de ce premier sous-enroulement ( 31 ) de haute tension.

7. Utilisation de la Machine ( 1 ) électrique suivant l'une des revendications précédentes, **caractérisée par** au moins deux deuxièmes sous-enroulements ( 22 ) supplémentaires disposés l'un derrière l'autre, le long de la deuxième branche ( 6 ) et enroulés, respectivement, autour de la deuxième branche ( 6 ) , pour chaque deuxième sous-enroulement ( 22 ) supplémentaire, un deuxième sous-enroulement ( 32 ) de haute tension enroulé autour de ce deuxième sous-enroulement ( 22 ) supplémentaire et, pour chaque deuxième sous-enroulement ( 32 ) de haute tension, un deuxième enroulement ( 50 ) de traction enroulé autour de ce deuxième sous-enroulement ( 32 ) de haute tension.

8. Utilisation d'une machine ( 1 ) électrique suivant l'une des revendications précédentes, dans un véhicule ayant une propulsion ( 80 ) du véhicule, alimenté en énergie électrique au choix, au moyen d'une tension alternative extérieure ou d'une tension continue, également extérieure, dans laquelle :
- dans le fonctionnement en tension alternative, la tension alternative extérieure est appliquée à l'enroulement ( 30 ) de haute tension, l'enroulement ( 20 ) supplémentaire est mis à terre unilatéralement et sinon, reste non connecté électriquement, et les enroulements ( 40, 50 ) de traction sont reliés respectivement à un convertisseur pour la propulsion ( 80 ) du véhicule,
- et dans le fonctionnement en tension continue, l'enroulement ( 30 ) de haute tension est mis à la terre unilatéralement et reste sinon non connecté électriquement, l'enroulement ( 20 ) supplémentaire est court-circuité et est mis à la terre unilatéralement et les enroulements ( 40, 50 ) de traction sont montés, respectivement, en bobines de filtrage du réseau pour une chaîne de propulsion en tension continue de la propulsion ( 80 ) du véhicule.

9. Utilisation de la machine ( 1 ) électrique suivant la revendication 8, dans le cas où la machine ( 1 ) électrique a un premier enroulement ( 60 ) de tension continue, enroulé autour du premier enroulement ( 40 ) de traction et un deuxième enroulement ( 70 ) de tension continue, enroulé autour du deuxième enroulement ( 50 ) de traction, **caractérisée en ce que** les enroulements ( 60, 70 ) de tension continue sont dans le fonctionnement en tension alternative, mis à la terre unilatéralement et sinon restent non connectés électriquement, et **en ce qu'**au moins un enroulement ( 60, 70 ) de tension continue est, dans le fonctionnement en tension continue, monté électriquement en série avec un enroulement ( 40, 50 ) de traction.

10. Utilisation d'une machine ( 1 ) électrique suivant les revendications 8 ou 9, **caractérisée en ce que** la propulsion ( 80 ) du véhicule est alimentée en énergie électrique respectivement par l'intermédiaire d'un système ( 90 ) de ligne de contact, en fonctionnement en tension alternative, au moyen d'une tension alternative extérieure et, en fonctionnement en tension continue par une tension continue extérieure.
